(19) Europäisches Patentamt
European Patent Office
Office européen des brevets

(11) **EP 4 059 693 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **21163088.4**

(22) Anmeldetag: **17.03.2021**

(51) Internationale Patentklassifikation (IPC):
**B29C 48/00** (2019.01) **B29C 48/07** (2019.01)
**B29C 48/92** (2019.01)

(52) Gemeinsame Patentklassifikation (CPC):
**B29C 48/0022; B29C 48/07; B29C 48/92;**
B29C 48/277; B29C 48/9135; B29C 2793/0027;
B29C 2793/0063; B29C 2948/92209;
B29C 2948/92428

(54) **PRODUKTIONSANLAGE ZUR HERSTELLUNG EXTRUDIERTER PLATTEN**

PRODUCTION PLANT FOR PRODUCING EXTRUDED PANELS

INSTALLATION DE PRODUCTION DESTINÉE À LA FABRICATION DE PANNEAUX EXTRUDÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.09.2022 Patentblatt 2022/38**

(73) Patentinhaber: **Akzenta Paneele + Profile GmbH 56759 Kaisersesch (DE)**

(72) Erfinder:
• **HANNIG, Hans-Jürgen**
**51427 Bergisch Gladbach (DE)**
• **HÜLLENKREMER, Felix**
**56076 Koblenz (DE)**
• **WENDLING, Peter**
**56290 Mörsdorf (DE)**

(74) Vertreter: **Michalski Hüttermann & Partner Patentanwälte mbB Kaistraße 16A 40221 Düsseldorf (DE)**

(56) Entgegenhaltungen:
**WO-A1-2010/024292** DE-A1-102007 004 247
US-A- 5 190 711 US-A1- 2007 023 953

## Beschreibung

Die Erfindung betrifft eine Produktionsanlage, mit deren Hilfe extrudierte Platten hergestellt werden können. Die extrudierten Platten können insbesondere zur Herstellung von Paneelen zur Abdeckung einer Oberfläche eines Raums verwendet werden.

Aus WO 2007/079845 A1 ist eine Produktionsanlage für aus Holz hergestellte Paneele bekannt, bei dem die gewünschte Paneellänge mit Hilfe eines Trennwerkzeugs von einem längeren Halbzeug abgetrennt werden kann.

Aus EP 3 578 384 A1 ist eine Produktionsanlage für aus Kunststoff hergestellte Paneele bekannt, bei dem zunächst ein plattenförmiges Endlosprofil hergestellt wird. Weitere Produktionsanlage zur Herstellung extrudierter Platten sind in den Patentschriften WO2010/024292A1,; DE102007004247A1, US2007/023953A1 und US5190711A beschrieben.

Es besteht ein ständiges Bedürfnis Paneele kostengünstig und bauraumsparend herstellen zu können.

Es ist die Aufgabe der Erfindung Maßnahmen aufzuzeigen, die eine kostengünstige und bauraumsparende Herstellung von Paneelen ermöglichen.

Die Lösung der Aufgabe erfolgt durch eine Produktionsanlage mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft eine Produktionsanlage zur Herstellung extrudierter Platten, insbesondere für Paneele zur Abdeckung einer Oberfläche eines Raums, mit einer Fördereinrichtung zur Förderung eines als plattenförmiges Endlosprofil erzeugten Halbzeugs entlang einer Förderrichtung mit einer definierten Fördergeschwindigkeit, einer Kantenschneideinrichtung zum Abtrennen eines zur Förderrichtung seitlichen Randbereichs des Halbzeugs, so dass in Förderrichtung nach der Kantenschneideinrichtung das Halbzeug als plattenförmiges Endlosgrundprofil mit einer quer zur Förderrichtung verlaufenden vordefinierten Grundplattenbreite vorliegt, und einer Vereinzelungseinrichtung zum Abtrennen von vereinzelten Platten von dem Endlosgrundprofil, insbesondere entlang einer quer zur Förderrichtung verlaufenden Trennlinie, wobei ein Abstand der Vereinzelungseinrichtung zu der Kantenschneideinrichtung in Fördereinrichtung derart bemessen ist, dass zwischen einer Durchschnittstemperatur $T_1$ des Halbzeugs beim Abtrennen des Randbereichs in der Kantenschneideinrichtung und einer Durchschnittstemperatur $T_2$ des Endlosgrundprofil beim Vereinzeln eine Temperaturdifferenz $T_1-T_2$ von $2\,K \leq T_1-T_2 \leq 15\,K$, insbesondere $4\,K \leq T_1-T_2 \leq 10\,K$ und vorzugsweise $5\,K \leq T_1-T_2 \leq 8\,K$ vorliegt.

Das extrudierte Halbzeug liegt unmittelbar nach dem Extrudieren mit einer Temperatur vor, die sich in der Nähe des Schmelzpunktes des für das Halbzeug verwendeten Materials befindet. In diesem Zustand lässt sich das Halbzeug kaum mit vertretbarem Kostenaufwand in der benötigten Präzision in einzelne Platten zerteilen. Daher wird das extrudierte Halbzeug zunächst abgekühlt. Die Abkühlung kann hierbei mit Hilfe einer separaten Kühleinrichtung und/oder durch natürliche Konvektion erfolgen, während das Halbzeug mit Hilfe der Fördereinrichtung in Förderrichtung von einem zugeordneten Extruder weg abgeführt wird. Durch das Abkühlen des Halbzeugs verfestigt sich das Material des Halbzeugs und kann dadurch leichter einem Trennprozess unterworfen werden. Hierbei wurde erkannt, dass es einen optimalen Temperaturbereich gibt, in dem ein Trennen besonders kostengünstig und mit hoher Qualität durchgeführt werden kann. In diesem optimalen Temperaturbereich ist das Material des Halbzeugs noch warm genug, dass aufgrund der noch vorliegenden Duktilität ein mechanischer Widerstand gegen ein Eindringen eines Trennwerkzeugs gering ist. Ein Verschleiß des Trennwerkzeugs kann dadurch minimiert werden. Zudem wird ein Sprödbruch mit einer undefinierten Bruchfläche an der Trennstelle vermieden, so dass eine besonders glatte Trennfläche an der Trennstelle erreicht werden kann. Hierbei kann die Duktilität des Halbzeugs ausreichen, dass eine geringfügige Einschnürung an dem Beginn und dem Ende der Trennstelle entsteht, die eine scharfkantige Ecke zwischen der Trennfläche und der Oberseite sowie der Unterseite des plattenförmigen Halbzeugs an der Trennstelle vermeidet. Ein Kantenbrechen an der Trennstelle ist dadurch eingespart. Gleichzeitig ist das Material des Halbzeugs in dem optimalen Temperaturbereich Bereich weit genug abgekühlt und hart genug, dass das Material nicht an dem Trennwerkzeug kleben bleibt oder sich unter der beim Trennen auftretenden Scherbelastung zu stark verformt. Die gewünschte Form der vereinzelten Platten kann mit einer hohen Präzision auch bei hohen Toleranzanforderungen sichergestellt werden, so dass eine hohe Maßhaltigkeit bei den vereinzelten Platten gegeben ist. Das Trennen des Materials kann im optimalen Temperaturbereich wie bei einem Schneiden durch Butter erfolgen.

Es wurde jedoch erkannt, dass es für die Zwecke der in der Kantenschneideinrichtung und in der Vereinzelungseinrichtung stattfindenden Trennprozesse nicht erforderlich ist, die Kantenschneideinrichtung und die Vereinzelungseinrichtung möglichst nah hintereinander vorzusehen, um eine Temperaturdifferenz zwischen dem Material in der Kantenschneideinrichtung und in der Vereinzelungseinrichtung möglichst zu minimieren. Tatsächlich ist der optimale Temperaturbereich groß genug, dass ein Schneidprozess in der Kantenschneideinrichtung und ein Schneidprozess in der Vereinzelungseinrichtung auch dann mit einer im Wesentlichen gleich guten Qualität erfolgen kann, wenn zwischen den beiden Schneidprozessen eine signifikante aber nicht zu hohe Temperaturdifferenz vorliegt, wie sie vorstehend für die Temperaturdifferenz $T_1-T_2$ angegeben ist. Dies ermög-

licht es unter Berücksichtigung der thermischen Radbedingungen, insbesondere der zu erwartenden natürlichen Konvektion, am Aufstellungsort der Produktionsanlage einen bewussten Abstand in Förderrichtung zwischen der Kantenschneideinrichtung und der Vereinzelungseinrichtung vorzusehen, der durch das zu erwartende thermische Verhalten des für das Halbzeug verwendeten Materials definiert ist. Der bewusst größer gewählte Abstand zwischen der Kantenschneideinrichtung und der Vereinzelungseinrichtung ermöglicht eine leichtere Zugänglichkeit und Wartung der Kantenschneideinrichtung und der Vereinzelungseinrichtung, während gleichzeitig ein Schneiden im optimalen Temperaturbereich beibehalten wird. Insbesondere wird dadurch Bauraum geschaffen, um die in der Kantenschneideinrichtung abgetrennten Randbereiche weiter zu verarbeiten. Hierzu kann ein Bauraum zwischen der Kantenschneideinrichtung und der Vereinzelungseinrichtung unterhalb des Endlosgrundprofils sowie der zur Förderung des Endlosgrundprofils vorgesehenen Förderelemente der Förderrichtung vorgesehen werden. Die Weiterverarbeitung der abgetrennten Randbereiche kann sich dadurch unmittelbar an die Kantenschneideinrichtung anschließen, ohne dass hierzu ein Bauraum der Produktionsanlage quer zur Förderrichtung signifikant vergrößert werden müsste. Stattdessen kann die Weiterverarbeitung der abgetrennten Randbereiche in einer Aufstellfläche vorgesehen sein, die sowieso schon von der Fördereinrichtung genutzt wird, wobei für die Weiterverarbeitung der abgetrennten Randbereiche in einem von der Fördereinrichtung eher weniger genutzter Höhenbereich vorgesehen werden kann. Die Weiterverarbeitung der abgetrennten Randbereiche kann dadurch im Wesentlichen nahezu bauraumneutral erfolgen. Durch den im Rahmen der für ein Schneiden optimalen und hierfür thermisch zulässigen Randbedingungen bewusst vergrößerten Abstand zwischen der Kantenschneideinrichtung und der Vereinzelungseinrichtung kann im wesentlichen bauraumneutral eine Weiterverarbeitung der abgetrennten Randbereiche vorgesehen werden, so dass bei einer hohen Maßhaltigkeit eine kostengünstige und bauraumsparende Herstellung von Paneelen ermöglicht ist.

Die Fördereinrichtung kann insbesondere aus verschiedenen Teileinheiten zusammengesetzt sein, deren jeweilige Fördergeschwindigkeit gleich oder unterschiedlich eingestellt sein können. Durch in verschiedenen Teilbereichen unterschiedlich eingestellte Fördergeschwindigkeiten kann insbesondere eine durch eine Abkühlung im Ausmaß eines thermisch bedingten Schrumpfmaßes bedingte Längenverringerung des jeweils geförderten Profils kompensiert werden, so dass durch Wärmedehnungseffekte verursachte unnötige Spannungen in dem geförderten Profil vermieden werden können. Insbesondere kann die Fördereinrichtung im Bereich der Vereinzelungseinrichtung unterbrochen sein, damit die Vereinzelungseinrichtung einen quer zur Förderrichtung verlaufenden durchgängigen Trennschnitt durchführen kann. Hierbei kann die in Förderrichtung nach der Vereinzelungseinrichtung vorgesehene Teileinheit der Fördereinrichtung einen größere Fördergeschwindigkeit als eine in Förderrichtung vor der Vereinzelungseinrichtung vorgesehene Teileinheit der Fördereinrichtung aufweisen, so dass die Vereinzelung der abgetrennten Platten verbessert sein kann. Die Fördereinrichtung beziehungsweise die jeweilige Teileinheit der Fördereinrichtung kann beispielsweise aktiv angetriebene und/oder passiv mitdrehende Rollen und/oder ein in Förderrichtung bewegtes Band aufweisen, um das jeweilige Profil in Förderrichtung fördern zu können. Wenn die Fördereinrichtung als Antriebsmittel zum Fördern des Halbzeugs nur angetriebene Rollen aufweist, ist es möglich zwischen den Rollen einen die natürliche Konvektion zur Abkühlung des Halbzeugs begünstigenden Abstand vorzusehen, wobei der Abstand zwischen einander nachfolgenden Rollen gering genug ist, dass eine Wellenbildung des Halbzeugs in einem noch nicht verfestigten und eher weichen Teilbereich vermieden ist. Die Förderrichtung ist zumindest bis zur Vereinzelungseinrichtung insbesondere geradlinig, das heißt ohne Kurven oder Abbiegungen, ausgeführt, so dass das Halbzeug ohne Biegungen entlang einer, vorzugsweise in einer Horizontalebene liegenden, Geraden gefördert werden kann.

Die Kantenschneideeinrichtung kann die über die über die gewünschte Grundplattenbreite hinausgehenden Randbereiche insbesondere kontinuierlich abtrennen. Hierzu kann das Halbzeug beispielsweise gegen ein feststehendes Messer oder Schneidrolle anlaufen. Das Abtrennen der Randbereiche erfolgt insbesondere durch ein spanloses Trennverfahren, insbesondere Abscheren an einer Messerschneide, so dass abgetrennte Späne, welche die Kantenschneideeinrichtung verschmutzen und beeinträchtigen könnten oder die Oberflächen des Endlosgrundprofil beeinträchtigen, vermieden sind. Hierbei wird die Erkenntnis ausgenutzt, dass das Halbzeug im optimalen Temperaturbereich vergleichsweise weich und duktil vorliegt, so dass ein verschleißarmes Abtrennen der Randbereiche durch ein spanloses Abscheren leicht durchgeführt werden kann. Zudem ist es möglich die abgetrennten Randbereiche als streifenförmiges Endlosprofil abzutrennen, die nachfolgend in Teilstücke gleichartiger Größe und Form, insbesondere als Granulat, zerkleinert werden können. Dies erleichtert die weitere Verarbeitung der abgetrennten Randbereiche.

Die Vereinzelungseinrichtung kann entlang der Trennlinie die Platte von dem Endlosgrundprofil abtrennen. Das Abtrennen der jeweiligen Platte erfolgt insbesondere durch ein spanloses Trennverfahren, insbesondere Abscheren an einer Messerschneide, so dass abgetrennte Späne, welche die Vereinzelungseinrichtung verschmutzen und beeinträchtigen könnten oder die Oberflächen der Platte und/oder des Endlosgrundprofils beeinträchtigen, vermieden sind. Hierbei wird die Erkenntnis ausgenutzt, dass das Endlosgrundprofil auch nach einer zwischenzeitlichen leichten Abkühlung nach der Kantenschneideinrichtung noch im optimalen Temperaturbereich vorliegt und vergleichsweise weich und duktil ist, so dass ein verschleißarmes Abtrennen der Platte durch ein spanloses Abscheren leicht durchgeführt werden kann.

Die Temperaturmessung zur Messung der Durchschnittstemperatur $T_1$ des Halbzeugs und der Durchschnittstemperatur $T_2$ des Endlosgrundprofil erfolgt insbesondere berührungslos mit Hilfe eines Pyrometers an einem in Förderrichtung definierten Messpunkt, vorzugsweise mittig entlang einer quer zur Förderrichtung verlaufenden linienförmigen Messstelle. Da das Halbzeug und das Endlosgrundprofil bezogen auf die Grundplattenbreite eine geringe Dicke aufweist, entspricht die so gemessene Oberflächentemperatur hinreichend gut der Kerntemperatur des Halbzeugs beziehungsweise des Endlosgrundprofils. Insbesondere wenn die Abkühlung des Halbzeugs im Wesentlichen nur durch natürliche Konvektion erfolgt, können durch Wärmeleitungseffekte verursachte Temperaturprofile in Dickenrichtung vernachlässigt werden und die berührungslos gemessene Oberflächentemperatur als die Durchschnittstemperatur für $T_1$ und $T_2$ verwendet werden. Bei einer Kühlung durch erzwungene Konvektion, insbesondere mit Hilfe eines Kühlgebläses, oder Kühlung mit Hilfe eines Kühlmediums, beispielsweise in einem Wasserbad, kann vorzugsweise die Durchschnittstemperatur für $T_1$ und $T_2$ durch eine Abschätzung der Kerntemperatur auf Basis der gemessenen Oberflächentemperatur erfolgen, wobei in der Abschätzung die ungefähre abgeführte Wärmemenge und ein damit verbundenes Temperaturprofil im Innern des Halbzeugs beziehungsweise des Endlosgrundprofils berücksichtigt werden können.

Die zu erwartende Abkühlung des Endlosgrundprofils zwischen der Vereinzelungseinrichtung und der Kantenschneideinrichtung, die für den in Abhängigkeit von der Temperaturdifferenz $T_1$-$T_2$ zu bestimmenden Abstand zwischen der Vereinzelungseinrichtung und der Kantenschneideinrichtung maßgeblich ist, kann unter Berücksichtigung der Temperatur, der Strömungsgeschwindigkeit und der Wärmekapazität des für die Kühlung des Endlosgrundprofils verantwortlichen Mediums abgeschätzt oder sogar analytisch berechnet werden. Insbesondere wenn die Abkühlung durch erzwungene oder natürliche Konvektion mit Umgebungsluft erfolgt, kann die am Aufstellort der Produktionsanlage zu erwartende Umgebungstemperatur berücksichtigt werden, wobei insbesondere auch bei einer witterungsbedingten und/oder jahreszeitlich bedingte angenommenen Temperaturschwankung der Umgebungstemperatur die Temperaturen $T_1$ und $T_2$ zu jedem Zeitpunkt immer noch im optimalen Temperaturbereich liegen. Da die Produktionsanlage in der Regel in einer temperierten Werkhalle aufgestellt sein dürfte, ist davon auszugehen, dass eine Temperaturschwankung der Umgebungstemperatur nur in einem geringen Umfang, beispielsweise von ± 3K, zu erwarten sind und bei genügend Sicherheit beim gewählten Abstand zwischen der Vereinzelungseinrichtung und der Kantenschneideinrichtung vernachlässigt werden können. Wenn eine zu erwartende Umgebungstemperatur am Aufstellort nicht bekannt sein sollte, kann mit einer Umgebungstemperatur von 20°C kalkuliert werden.

Der Wärmestrom, der zwischen der Vereinzelungseinrichtung und der Kantenschneideinrichtung bei der Kühlung des Endlosgrundprofil abgeführt wird, hängt bei einer Kühlung durch natürlichen Konvektion und einer gegeben Temperatur des Endlosgrundprofils nach dem Fourierschen Gesetz im Wesentlichen nur von dem Wärmeübergangskoeffizient $\alpha$ und der Umgebungstemperatur $T_u$ ab, der sich in jedem Teilstück $\Delta D$ des sich über den gesamten Abstand D mit der Fördergeschwindigkeit $v_1$ im Bereich der Kantenschneideinrichtung erstreckenden Endlosgrundprofils entlang der Förderrichtung bei der sich in dem Teilstück jeweils einstellenden Durchschnittstemperatur ergibt, wobei $T_1$ und $T_2$ innerhalb des optimalen Temperaturbereichs liegen, also $T_1$, $T_2 \geq T_{min}$ und $T_1$, $T_2 \leq T_{max}$ gilt, woraus sich die Anforderung $T_1$-$T_2 \leq \Delta T_{max}$ ergibt. Der durch $T_{min}$ und $T_{max}$ begrenzte optimale Temperaturbereich mit $T_{max} - T_{min} = \Delta T_{max}$ hängt im Wesentlichen von dem für das Halbzeug verwendete Material ab. Für den Abstand D zwischen der Vereinzelungseinrichtung und der Kantenschneideinrichtung kann sich unter Berücksichtigung einer natürlichen Konvektion zwischen der Vereinzelungseinrichtung und der Kantenschneideinrichtung folgender mathematischer Zusammenhang ergeben:

$$D = f(T_1, T_2, \alpha, T_u, v_1)$$

Für den maximalen Abstand $D_{max}$ zwischen der Vereinzelungseinrichtung und der Kantenschneideinrichtung kann $T_1 = T_{min}$ und $T_2 = T_{max}$ gesetzt werden, so dass sich

$$D_{max} = f(T_{min}, T_{max}, \alpha, T_u, v_1)$$

ergibt und der maximalen Abstand $D_{max}$ im Wesentlichen nur noch von der Fördergeschwindigkeit $v_1$ im Bereich der Kantenschneideinrichtung als beeinflussbaren variablen Parameter abhängt. Für den tatsächlichen Abstand D zwischen der Vereinzelungseinrichtung und der Kantenschneideinrichtung gilt vorzugsweise $D < D_{max}$, um eine ausreichende Sicherheit gegen Schwankungen in den Parametern $\alpha$, $T_u$, $v_1$ vorzuhalten und die Erstreckung der Produktionsanlage nicht unnötig groß werden zu lassen.

Das Halbzeug kann insbesondere durch Extrusion über eine Breitschlitzdüse erzeugt werden, wobei sich an dem Extruder zunächst mehrere, insbesondere temperierte, Kalanderwalzen anschließen, damit das Halbzeug mit definierten Dicken und Oberflächengüte der Fördereinrichtung zugeführt werden kann. Die Kalanderwalzen und/oder ein Glättwerk zum Glätten der Oberseite und/oder der Unterseite des Halbzeugs mit einer definierten Oberflächengüte können durch ihre Temperierung eine bewusste aktive Kühlung des aus der Breitschlitzdüse austretenden Materials bewirken. Eine geeignete Zusammensetzung des extrudierten Halbzeugs ist beispielsweise in EP 3 578 384 A1 angegeben, auf deren diesbezüglicher Inhalt hiermit als Teil der Erfindung Bezug genommen wird.

Die vereinzelten Platten können insbesondere zu Paneelen weiterverarbeitet werden, mit dessen Hilfe eine Oberfläche eines Raums abgedeckt werden kann. Beispielsweise können die Paneele als Bodenlaminat einen optisch ansprechenden Fußboden des Raums ausbilden. Das Paneel kann einen auf einen Quader als Grundform basierenden Paneelkörper aufweisen, dessen Längserstreckung in der Regel deutlich größer als seine Quererstreckung ist, während die Dicke des Paneelkörper in Dickenrichtung in der Regel kleiner als seine Quererstreckung ist. Der Paneelkörper kann insbesondere durch die vereinzelte Platte oder einem nach mindestens einem weiteren Zerteilen der Platte vorliegenden Plattenkörper ausgebildet sein. Der Paneelkörper kann an der einen in Längsrichtung verlaufenden Langseite einen insbesondere in Längsrichtung durchgängig verlaufenden und in Querrichtung abstehenden Spund-Ansatz und an der anderen Seite eine in Querrichtung in dem Paneelkörper eingebrachte Spund-Nut aufweisen, so dass im Wesentlichen identisch ausgestaltete Paneele an den Langseiten anliegend über eine als Spundung ausgestaltete Feder-Nut-Verbindung miteinander verbunden werden können. Zudem kann von der in Querrichtung verlaufenden Kurzseite des Paneelkörpers ein Arretierhaken in Längsrichtung abstehen, während an der anderen Kurzseite des Paneelkörpers ein Federkörper abstehen kann, der eine Aufnahmenut begrenzt, so dass im Wesentlichen identisch ausgestaltete Paneele auch an ihren Kurzseiten über eine Feder-Nut-Verbindung miteinander verrastet werden können. Bei der Montage kann das eine Paneel auf einem eine Gebrauchsebene definierenden Untergrund, beispielsweise ein Boden, eine Seitenwand oder eine Decke eines Raums, flächig aufliegen. Das weitere Paneel kann gegebenenfalls beispielsweise unter einem Winkel von ca. 30° leicht angeschrägt mit einem seitlich neben dem Paneel verlaufenden bereits montierten Paneel an der Langseite angesetzt und danach auf den Untergrund geschwenkt werden, wodurch die Feder-Nut-Verbindung zwischen dem Arretierhaken des Paneels und der Aufnahmenut des weiteren Paneel hergestellt werden kann.

Insbesondere ist für die Durchschnittstemperatur $T_1$ des Halbzeugs beim Abtrennen des Randbereichs in der Kantenschneideinrichtung $40°C \leq T_1 \leq 60°C$, insbesondere $45°C \leq T_1 \leq 50°C$ und vorzugsweise $T_1 = 47°C \pm 2$ K vorgesehen. Bei einer derartigen Temperatur befindet sich das Halbzeug während des Abtrennens des Randbereichs im Wesentlichen am oberen Rand des optimalen Temperaturbereichs, wobei die Temperatur um einen einige K betragenden Sicherheitsabstand unterhalb des oberen Rands des optimalen Temperaturbereichs vorliegen kann. Hierbei ist die Durchschnittstemperatur $T_1$ des Halbzeugs zumindest so hoch, dass auch bei einem deutlichen Abstand der Vereinzelungseinrichtung zur Kantenschneideinrichtung auch die Durchschnittstemperatur $T_2$ des Endlosgrundprofil während des Abtrennens der vereinzelten Platten ebenfalls noch im optimalen Temperaturbereich liegt. Die gewählte Durchschnittstemperatur $T_1$ des Halbzeugs eignet sich insbesondere für einen extrudierten thermoplastischen Kunststoff, beispielsweise Polypropylen (PP) sowie Homo- Co- oder Terpolymere des PP, Polyethylen (PE), thermoplastische Elastomere wie beispielsweise thermoplastische Polyolefine (TPO), thermoplastische Styrole (TPS), thermoplastisches Polyurethan (TPU), thermoplastische Vulkanisate (TPV) oder thermoplastische Copolyester (TPC). Sämtliche der zuvor genannten thermoplastischen Kunststoffe können in üblicher Weise auch Füllstoffe, wie z.B. Kreide, Schichtsilikate oder Gesteinsmehle aufweisen. Zur Anpassung der physikochemischen Eigenschaften der Kunststoffe kann es darüber hinaus vorgesehen sein, dass die Kunststoffe weitere, die entsprechenden Eigenschaften des Kunststoffs modifizierende Additive, wie z.B. Weichmacher, UV-Stabilisatoren, Antioxidantien, Flammschutzmittel, Antistatika, Schlagzähigkeitsmodifikatoren und/der Farbstoff aufweisen.

Vorzugsweise ist für eine Abkühlung des Endlosgrundprofil zwischen der Kantenschneideinrichtung und der Vereinzelungseinrichtung ausschließlich eine Abkühlung durch Konvektion, insbesondere ausschließlich natürliche Konvektion, vorgesehen. Der Aufwand für eine aktive Kühlung, insbesondere mit Hilfe eines zusätzlichen Kühlmittels, ist dadurch vermieden und eingespart. Zudem können innere Spannungen durch eine zu starke Abkühlung vermieden werden. Eine in dem Bereich zwischen der Kantenschneideinrichtung und der Vereinzelungseinrichtung vorgesehener kühlender Wärmestrom kann dadurch bewusst vergleichsweise gering gehalten werden, so dass ein Temperaturunterschied zwischen der Temperatur beim Abtrennen der Randbereiche und beim Abtrennen der vereinzelten Platten bei einem bewusst groß gewählten räumlichen Abstand der Vereinzelungseinrichtung zur Kantenschneideinrichtung eher klein sein kann. Gegebenenfalls kann sogar dem Endlosgrundprofil bewusst Wärme zugeführt werden, beispielsweise mit Hilfe von Heizstrahlern, um bei einem möglichst großen Abstand der Vereinzelungseinrichtung zur Kantenschneideinrichtung ein möglichst gutes Schneidergebnis sowohl in der Kantenschneideinrichtung als auch in der Vereinzelungseinrichtung zu erhalten.

Besonders bevorzugt stellt die Kantenschneideinrichtung ein spanloses Trennen des Radbereichs von dem Halbzeug, insbesondere mit Hilfe eines als Schneidrolle ausgestalteten Trennwerkzeugs, bereit. Hierbei wird die Erkenntnis ausgenutzt, dass das Halbzeug im optimalen Temperaturbereich vergleichsweise weich und duktil vorliegt, so dass ein verschleißarmes Abtrennen der Randbereiche durch ein spanloses Abscheren leicht durchgeführt werden kann. Durch das spanlose Trennverfahren in der Kantenschneideinrichtung können abgetrennte Späne vermieden werden, welche die Kantenschneideeinrichtung verschmutzen und deren Funktionsweise beeinträchtigen könnten. Zudem ist vermieden, dass Späne auf die noch weiche und duktile Oberfläche des Halbzeugs und/oder des Endlosgrundprofil gelangen und dort haften bleiben. Eine Beeinträchtigung der Oberflächenqualität des Endlosgrundprofils durch abgetrennte Späne ist vermieden. Zudem ist es nicht erforderlich abgetrennt Späne abzusaugen, so dass ein kostengünstiger und verlässlicher Abtrennprozess für das Abtrennen der Randbereiche gegeben ist.

Insbesondere stellt die Vereinzelungseinrichtung ein spanloses Trennen der Platte von dem Endlosgrundprofil mit Hilfe eines, insbesondere als ausgestalteten, Trennwerkzeugs, bereit, wobei insbesondere das Trennwerkzeug der Vereinzelungseinrichtung mit der Fördergeschwindigkeit des Endlosgrundprofis in Förderrichtung mitbewegbar ausgestaltet ist. Hierbei wird die Erkenntnis ausgenutzt, dass das Endlosgrundprofil im optimalen Temperaturbereich vergleichsweise weich und duktil vorliegt, so dass ein verschleißarmes Abtrennen der vereinzelten Platte durch ein spanloses Abscheren leicht durchgeführt werden kann. Durch das spanlose Trennverfahren in der Vereinzelungseinrichtung können abgetrennte Späne vermieden werden, welche die Vereinzelungseinrichtung verschmutzen und deren Funktionsweise beeinträchtigen könnten. Zudem ist vermieden, dass Späne auf die noch weiche und duktile Oberfläche des Endlosgrundprofil und/oder der Platte gelangen und dort haften bleiben. Eine Beeinträchtigung der Oberflächenqualität der Platte durch abgetrennte Späne ist vermieden. Zudem ist es nicht erforderlich abgetrennt Späne abzusaugen, so dass ein kostengünstiger und verlässlicher Abtrennprozess für das Abtrennen der Platten gegeben ist. Durch das Mitbewegen des Trennwerkzeug in Förderrichtung mit der gleichen Geschwindigkeit wie das Endlosgrundprofil kann eine saubere Schnittkante erzeugt werden, wie sonst nur bei einem Schneiden eines unbeweglichen Werkstücks erzeugt werden könnte. Eine angeschrägte Schnittfläche der Platte kann dadurch vermieden werden, so dass die Platte im Wesentlichen einem Quader entspricht.

Vorzugsweise ist in Förderrichtung zwischen der Kantenschneideinrichtung und der Vereinzelungseinrichtung ein Sammelbehälter zum Sammeln der in der Kantenschneideinrichtung abgetrennten Randbereiche angeordnet. Durch den bewusst vergrößerten Abstand der Vereinzelungseinrichtung zur Kantenschneideinrichtung in Förderrichtung kann der Sammelbehälter im Bereich der Fördereinrichtung positioniert sein, so dass der Sammelbehälter nahezu bauraumneutral vorgesehen sein kann. Die als streifenförmiges Endlosprofil abgetrennten Randbereiche können vor dem Trennwerkzeug der Kantenschneideinrichtung noch mit dem Halbzeug verbunden sein, so dass die abgetrennten Randbereiche in Förderrichtung hinter dem Trennwerkzeug der Kantenschneideinrichtung nur leicht seitlich beabstandet zu dem Endlosgrundprofilverlaufen können. Die abgetrennten Randbereiche können dadurch leicht dem zwischen der Kantenschneideinrichtung und der Vereinzelungseinrichtung vorgesehenen Sammelbehälter zugeführt werden, ohne dass die als streifenförmiges Endlosprofi abgetrennten Randbereiche unkontrolliert abbrechen können. Die abgetrennten Randbereiche können dadurch leicht kontinuierlich abgeführt und in dem Sammelbehälter gesammelt werden. Die als streifenförmiges Endlosprofil abgetrennten Randbereiche können in dem Sammelbehälter in kleinere Stücke zerbrechen oder vorher definiert zerkleinert werden. Der Sammelbehälter kann insbesondere durch eine Relativbewegung quer zur Förderrichtung wegbewegt und durch einen noch leeren Sammelbehälter ersetzt werden, so dass die abgetrennten Randbereiche batch-weise weggebracht werden können.

Besonders bevorzugt ist der Sammelbehälter in Schwerkraftrichtung unterhalb des Endlosgrundprofil angeordnet, wobei insbesondere das Endlosgrundprofil den Sammelbehälter in Schwerkraftrichtung betrachtet zumindest zu einem Großteil überdeckt. Ein seitliches Überstehen des Sammelbehälters über die seitliche Erstreckung des Endlosgrundprofil hinaus kann dadurch gering gehalten oder sogar ganz vermieden werden. Der Bauraumbedarf kann dadurch minimiert werden. Zudem ist es leicht möglich den Sammelbehälter nach oben hin offen auszugestalten, so dass durch eine Sichtprüfung leicht erkannt werden kann, ob der Sammelbehälter durch einen leeren Sammelbehälter ausgetauscht werden sollte. Die oberhalb des Sammelbehälters vorgesehenen Bauteile der Fördereinrichtung, insbesondere Rollen, und/oder das Material des Endlosgrundprofils können die nach oben offene Öffnung des Sammelbehälters überdecken und aus dem Inneren des Sammelbehälters hochspringende abgebrochene Stücke des abgetrennten Randbereichs zurückhalten.

Insbesondere ist der Sammelbehälter mit einer Rückfördereinrichtung zur Förderung des Inhalts des Sammelbehälters in einen Recyclingbehälter verbunden, wobei insbesondere der Recyclingbehälter zur zumindest teilweisen und/oder zeitweiligen Beaufschlagung eines Extruders zur Erzeugung des Halbzeugs mit einem aus dem Recyclingbehälter stammenden Edukt mit dem Extruder verbindbar ist. Die Rückfördereinrichtung kann beispielsweise über einen Schneckentrieb und/oder einen pneumatisch erzeugten Druck beziehungsweise Unterdruck die in dem Sammelbehälter gesammelten Stücke der Randbereiche abführen. Die abgetrennten Randbereiche können insbesondere vollständig recycelt werden und für die Herstellung des Halbzeugs wiederverwendet werden. Die in dem Recyclingbehälter gesammelten abgetrennten Randstücke können nahezu identisch der Zusammensetzung eines nicht-recycelten, also virginen, Edukts entsprechen, so dass sie sich im aufgeschmolzenen Zustand im Wesentlich nicht von dem nicht-recycelten virginen Edukt unterscheiden und diesem gut zugemischt werden können. Mit Hilfe der Rückfördereinrichtung kann im Wesentlichen eine nahezu kontinuierliche Abfuhr und/oder Beimischung der abgetrennten Randstücke zu dem Edukt für den Extruder realisiert werden.

Vorzugsweise ist in Fördereinrichtung zwischen der Kantenschneideinrichtung und der Vereinzelungseinrichtung mindestens eine Zerkleinerungseinrichtung zur Zerkleinerung des als streifenförmigen Endlosprofil abgetrennten Randbereichs vorgesehen, wobei die Zerkleinerungseinrichtung ausgestaltet ist in der Zerkleinerungseinrichtung aus dem abgetrennten Randbereich erzeugte zerkleinerte Randstücke einem Sammelbehälter zuzuführen, wobei insbesondere die Zerkleinerungseinrichtung in Förderrichtung zwischen der Kantenschneideinrichtung und dem Sammelbehälter vorgesehen ist. Die Zerkleinerungseinrichtung kann aufgrund des bewusst größer gewählten Abstands der Vereinzelungseinrichtung zur Kantenschneideinrichtung in unmittelbarer Nähe der Vereinzelungseinrichtung angeordnet sein, ohne dass hierbei der Bauraumbedarf der Produktionsanlage signifikant steigt. Der als streifenförmiges Endlosprofil abgetrennte Randbereich kann in Förderrichtung hinter der Kantenschneideinrichtung der Zerkleinerungseinrichtung, beispielsweise eine Schneidmühle mit einem rotierenden Rotormesser als zerkleinerungswerkzeug, in nahezu gleich große Stücke zerkleinert werden. Der in der Zerkleinerungseinrichtung, insbesondere spanlos, zerkleinerte Randbereich kann beispielsweise als streifenförmiges Granulat vorliegen, das nachfolgend leicht, beispielsweise pneumatisch, weggefördert werden kann. Aufgrund der, sofern überhaupt, allenfalls nur gering streuenden dreidimensionalen Formgestaltung des zerkleinerten Randbereichs ist eine nachfolgende Verarbeitung des zerkleinerten Randbereichs vereinfacht. Insbesondere ist der zerkleinerte Randbereich leicht und nahezu ohne Ausschuss recycelbar.

Besonders bevorzugt sind eine erste Zerkleinerungseinrichtung zur Zerkleinerung eines an einem ersten Rand des Halbzeugs abgetrennten ersten Randbereichs und eine zweite Zerkleinerungseinrichtung zur Zerkleinerung eines an einem vom dem ersten Rand wegweisenden zweiten Rand des Halbzeugs abgetrennten zweiten Randbereichs vorgesehen, wobei sowohl die erste Zerkleinerungseinrichtung als auch die zweite Zerkleinerungseinrichtung in Fördereinrichtung zwischen der Kantenschneideinrichtung und dem Sammelbehälter vorgesehen sind, wobei sowohl die erste Zerkleinerungseinrichtung als auch die zweite Zerkleinerungseinrichtung die in der jeweiligen Zerkleinerungseinrichtung erzeugten Randstücke dem selben Sammelbehälter zuführen. Die erste Zerkleinerungseinrichtung und die zweite Zerkleinerungseinrichtung können in unmittelbarer Nähe der Stelle positioniert sein, wo der jeweils zugeordnete Randbereich in der Kantenschneideinrichtung abgetrennt wird. Eine zu starke Biegung des als streifenförmiges Endlosprofil vorliegenden abgetrennten Randbereichs und/oder eine zu großer Bauraumbedarf in Förderrichtung kann dadurch vermieden werden. Der abgetrennte Randbereich kann ohne das Risiko eines Abbrechens der jeweils zugeordneten Zerkleinerungseinrichtung zugeführt werden. Die in der ersten Zerkleinerungseinrichtung und in der zweiten Zerkleinerungseinrichtung zerkleinerten Randbereiche könne in dem gemeinsamen Sammelbehälter gesammelt werden, der bauraumsparend in ein einem quer zur Förderrichtung liegenden Zwischenraum zwischen der ersten Zerkleinerungseinrichtung und der zweiten Zerkleinerungseinrichtung angeordnet sein kann. Hierbei ist es möglich, dass der Sammelbehälter und die Zerkleinerungseinrichtungen in einem gemeinsamen Förderabschnitt angeordnet sind, so dass in einer horizontalen Blickrichtung quer zur Förderrichtung der Sammelbehälter und die Zerkleinerungseinrichtungen sich einander überdecken können. Es ist aber auch möglich, dass der Sammelbehälter zu den Zerkleinerungseinrichtung in Förderrichtung versetzt angeordnet ist, um einen leichten Austausch des Sammelbehälters durch eine Relativbewegung des vollen und des leeren Sammelbehälters quer zur Förderrichtung zu ermöglichen, insbesondere wenn der hierzu erforderliche Abstand der Vereinzelungseinrichtung zu der Kantenschneideinrichtung immer noch die vorgesehene Temperaturdifferenz von $T_1$-$T_2$ gewährleistet.

Insbesondere ist die mindestens eine Zerkleinerungseinrichtung in Schwerkraftrichtung unterhalb des Endlosgrundprofil angeordnet, wobei insbesondere das Endlosgrundprofil die mindestens eine Zerkleinerungseinrichtung in Schwerkraftrichtung betrachtet zumindest zu einem Großteil überdeckt. Ein seitliches Überstehen der Zerkleinerungseinrichtung über die seitliche Erstreckung des Endlosgrundprofil hinaus kann dadurch gering gehalten oder sogar ganz vermieden werden. Der Bauraumbedarf der Produktionsanlage kann dadurch minimiert werden.

Besonders bevorzugt ist in Förderrichtung hinter der Vereinzelungseinrichtung eine Trenneinrichtung zum, insbesondere spanlosen, Zerteilen der Platte in einzelne Paneele, insbesondere entlang mindestens einer in Förderrichtung verlaufenden Trennlinie, vorgesehen, wobei ein Abstand der Trenneinrichtung zu der Vereinzelungseinrichtung in Fördereinrichtung derart bemessen ist, dass zwischen einer Durchschnittstemperatur $T_2$ des Endlosgrundprofils beim Vereinzeln in der Vereinzelungseinrichtung und einer Durchschnittstemperatur $T_3$ der Platte beim Zerteilen in der Trenneinrichtung eine Temperaturdifferenz $T_2$-$T_3$ von $0\,K \leq T_2$-$T_3 \leq 20\,K$, insbesondere $3\,K \leq T_2$-$T_3 \leq 15\,K$ und vorzugsweise $T_2$-$T_3$ $= 5\,K \pm 2\,K$ vorliegt. Dadurch kann das Zerteilen der Platte in Paneele, beziehungsweise in für die Herstellung von Paneelen vorgesehene Paneelkörper, in einem Temperaturbereich stattfinden, der noch im optimalen Temperaturbereich liegt oder leicht darunter liegt. Da die Trenneinrichtung kein Endlosprofil, sondern bereits vereinzelte Platten, vorzugsweise spanlos, bearbeitet, kann auch bei einer niedrigeren Temperatur ein gutes Schnittergebnis mit ebenen Schnittflächen erreicht werden. Statt eines kontinuierlichen Trennens kann die Trenneinrichtung ein batch-artiges Trennen mit Hilfe mindestens eines Messers vorsehen, wobei es aufgrund der geringeren Temperatur leicht möglich ist, die zu trennenden Paneele mit Hilfe mindestens einen Niederhalters anzudrücken, ohne dass eine wellenartige Verformung der Platte und der abzutrennenden Paneele zu befürchten ist. Das Trennen in der Trenneinrichtung kann dadurch mit einer hohen Präzision und einer guten Schnittgüte erfolgen.

Die vereinzelten Platten und/oder Paneele können zum Ende der Fördereinrichtung hin in einer Verpackungseinrichtung, vorzugsweise auf einer Palette, aufgestapelt werden. Die aufgestapelten Platten und/oder Paneele können, insbesondere nach einem Abkühlen auf Umgebungstemperatur einer weiteren, insbesondere spanenden, Bearbeitung zugeführt werden, beispielsweise um in den die Oberseite mit der Unterseite verbindenden Seitenflächen einen Spund-Ansatz, eine Spund-Nut, einen Arretierhaken oder einen Federkörper auszuformen.

Insbesondere stellt die Fördereinrichtung eine Fördergeschwindigkeit $v_1$ von 4,5 m/min $\leq v_1 \leq$ 21,0 m/min, insbesondere 5,0 m/min $\leq v_1 \leq$ 8,0 m/min und vorzugsweise $v_1 =$ 5,5 m/min $\pm$ 0,5 m/min oder $v_1 =$ 7,5 m/min $\pm$ 0,5 m/min bereit. Diese Fördergeschwindigkeit ermöglicht eine hohe Produktivität ohne in das Halbzeug unnötige innere Spannungen zu induzieren. Zudem erlaubt diese Fördergeschwindigkeit auch bei einem bewusst größer als unbedingt erforderlich gewählten Abstand der Vereinzelungseinrichtung zu der Kantenschneideinrichtung, dass sowohl die Kantenschneideinrichtung als auch die Vereinzelungseinrichtung in dem erwärmten optimalen Temperaturbereich einen Schneidprozess durchführen können.

Zusätzlich oder alternativ ist die Fördergeschwindigkeit $v_1$ derart eingestellt, dass bei einer vorgegebenen Dicke und einer vorgegeben Grundplattenbreite der herzustellenden Platten ein bestimmter, insbesondere im Wesentlichen konstanter, Extruderdurchsatz, beispielsweise 6000 kg/h oder 8500 kg/h, erreicht wird. Die Fördergeschwindigkeit $v_1$ kann dadurch an den von dem Extruder bereitstellbaren maximalen Extruderdurchsatz angepasst sein, wodurch eine besonders hohe Produktivität erreicht wird. Die Fördergeschwindigkeit $v_1$ kann dadurch eine Funktion der Dicke d der Platte in Dickenrichtung, der Grundplattenbreite b und dem maximalen Extruderdurchsatz $q_{m,\,max}$ definiert sein, so dass

$$v_1 = f(d, b, q_{m,\,max})$$

gilt. Für den maximalen Abstand $D_{max}$ zwischen der Vereinzelungseinrichtung und der Kantenschneideinrichtung kann sich somit

$$D_{max} = f(T_{min}, T_{max}, \alpha, T_u, d, b, q_{m,\,max})$$

ergeben. Der maximale Abstand $D_{max}$ hängt in diesem Fall nur noch von der Leistungsfähigkeit des Extruders, den Materialeigenschaften des für die Platten geeignet gewählten Materials und der geeignet gewählten Geometrie der Platten ab. Dies ermöglicht es für ein bestimmte Menge an Produktvarianten von herzustellen Platten einen geeigneten Abstand D zwischen der Vereinzelungseinrichtung und der Kantenschneideinrichtung bereits bei der Planung und Auslegung der Produktionsanlage überprüfen zu können.

Vorzugsweise ist vorgesehen, dass die Fördereinrichtung an einem zu einem Extruder weisenden, insbesondere in einem im Wesentlichen pastösen Zustand vorliegenden, Anfangsbereich des Halbzeugs eine in Förderrichtung weisende Druckkraft und an einem zu der Vereinzelungseinrichtung weisenden, insbesondere in einem im Wesentlichen festen Zustand vorliegenden, Endbereich des Endlosgrundprofil eine in Förderrichtung weisende Zugkraft aufprägt, wobei die angreifenden Druckkräfte und Zugkräfte derart bemessen sind, dass durch Wärmedehnungseffekte während einer Abkühlung des Halbzeugs entstehende Stauchungen und Streckungen zumindest zu einem Großteil kompensiert sind. Hierbei kann insbesondere die Fördergeschwindigkeit entlang der Förderrichtung lokal derart angepasst sein, dass Wärmedehnungseffekte infolge einer entlang der Förderrichtung stattfindenden Abkühlung sowie eine Schrumpfmaß des Halbzeugs in Förderrichtung kompensiert werden können. Die am weichen Ende des Halbzeugs angreifende Druckkraft kann insbesondere durch nachfolgendes extrudiertes Material aufgebaut werden, während die Zugkräfte an den bereits hinreichend verfestigten Bereichen des Halbzeugs durch ein aktiv angreifendes Förderelement der Fördereinrichtung bereitgestellt werden können. Unnötige innere Spannungen in dem Halbzeug können dadurch vermieden werden, so dass eine ungewollte Verformung, beispielsweise eine Wellenbildung, des Halbzeugs vermieden werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

Fig. 1: eine schematische Prinzipdarstellung einer Produktionsanlage und
Fig. 2: eine schematische Draufsicht eines von der Produktionsanlage aus Fig. 1 hergestellten Halbzeugs.

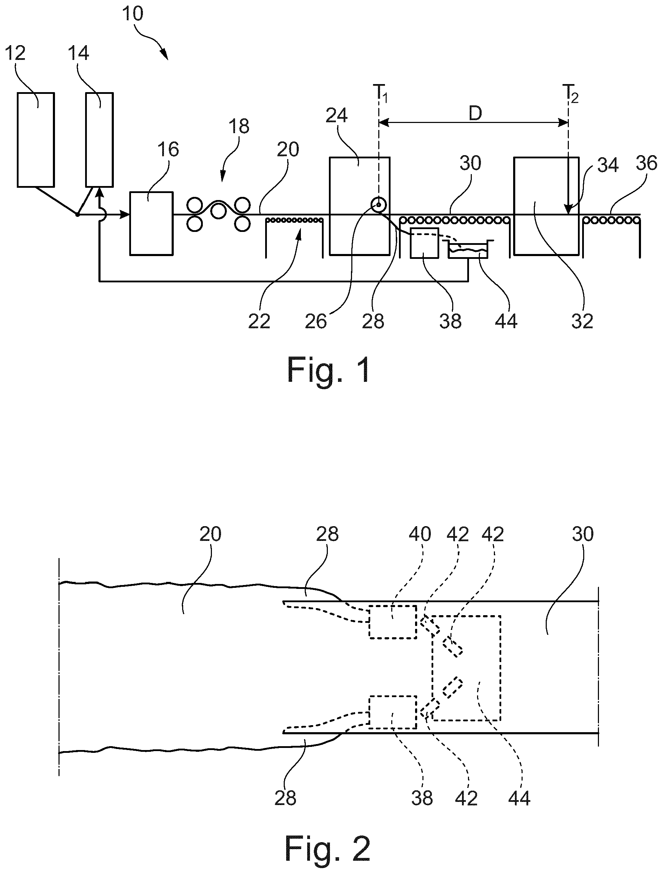

Die in Fig. 1 dargestellte Produktionsanlage 10 weist einen Vorlagebehälter 12 und einen Recyclingbehälter 14 auf, aus denen ein Extruder 16 mit einem zu extrudierenden Edukt beaufschlagt werden kann. Der Extruder 16 kann das Edukt über eine Breitschlitzdüse einem Kalander 18 zuführen, so dass nach dem Kalander ein als plattenförmiges Endlosprofil ausgestaltetes Halbzeug 20 vorliegt, das von einer Fördereinrichtung 22 in Förderrichtung mit einer bestimmten Fördergeschwindigkeit abgeführt wird. Hierbei kann das Halbzeug 20, insbesondere durch natürliche Konvektion, während der Förderung abgekühlt werden, wobei die lokale Fördergeschwindigkeit der Fördereinrichtung 22 derart angepasst sein kann, dass Wärmedehnungseffekte durch eine Schrumpfung des Materials des Halbzeugs 20 kompensiert werden können. Das Halbzeug 20 wird von der Fördereinrichtung 22 einer Kantenschneideinrichtung 24 zugeführt, die bei einer Durchschnittstemperatur $T_1$ des Halbzeugs 20, insbesondere mit Hilfe eines Rollmessers 26, Randstreifen 28 abtrennt, so dass auf der Fördereinrichtung 22 ein Endlosgrundprofil 30 mit begradigten Seitenkanten und einer definierten Grundplattenbreite quer zur Förderrichtung verbleibt. Das Endlosgrundprofil 30 wird nachfolgend einer Vereinzelungseinrichtung 32 zugeführt, die bei einer Durchschnittstemperatur $T_2$ des Endlosgrundprofils 30, insbesondere mit Hilfe eines in Förderrichtung mitbewegten Guillotine-Messers 34, vereinzelte Platten 36 abtrennt. Die Durchschnittstemperatur $T_1$ des Halbzeugs 20 in der Kantenschneideinrichtung 24 und die Durchschnittstemperatur $T_2$ des Endlosgrundprofils 30 in der Vereinzelungseinrichtung 32 liegen beide innerhalb eines vergleichsweise engen optimalen Temperaturbereichs, in dem das Material des Halbzeugs 20 und des Endlosgrundprofils 30 noch warm genug ist, dass aufgrund der noch vorliegenden Duktilität ein mechanischer Widerstand gegen ein Eindringen eines Trennwerkzeugs gering ist, aber bereits hart genug ist, dass das Material nicht an dem Trennwerkzeug kleben bleibt oder sich unter der beim Trennen auftretenden Scherbelastung zu stark verformt.

Die vorhandene Breite des optimalen Temperaturbereichs wird insoweit ausgenutzt, dass ein Abstand D zwischen der Vereinzelungseinrichtung 34 zu der Kantenschneideinrichtung 24 bewusst größer als minimal erforderlich gewählt, wobei der Abstand D klein genug ist, dass eine zu starke Abkühlung des Endlosgrundprofils 30 durch natürliche Konvektion vermieden ist. Dies ermöglicht es die als streifenförmiges Endlosprofile abgetrennten Randbereiche 28 einer zugeordneten ersten Zerkleinerungseinrichtung 38 beziehungsweise einer zweiten Zerkleinerungseinrichtung 40 zuzuführen, in der die Randbereiche 28 in im Wesentlichen gleich große Randstücke 42 zerkleinert und einem gemeinsamen Sammelbehälter 44 zugeführt werden können. Aus dem Sammelbehälter 44 können die Randstücke 42, beispielsweise mit Hilfe einer Rückfördereinrichtung, dem Recyclingbehälter 14 zugeführt und wiederverwendet werden. Aufgrund des bewusst größer gewählten Anstands D können die Zerkleinerungseinrichtungen 38, 40 und der Sammelbehälter 44 bauraumsparend in Förderrichtung zwischen der Vereinzelungseinrichtung 32 und der Kantenschneideinrichtung 24, insbesondere unterhalb der Fördereinrichtung 22 und dem Endlosgrundprofil 30, untergebracht werden.

Wie in Fig. 2 dargestellt ist, ist es sogar möglich die Zerkleinerungseinrichtungen 38, 40 und den Sammelbehälter 44 zu einem Großteil, vorzugsweise vollständig, unterhalb des Endlosgrundprofils 30 zu positionieren. Hierbei kann eine gewisse Elastizität der als streifenförmige Endlosprofile abgetrennten Randbereiche 28 quer zur Förderrichtung ausgenutzt werden. Alternativ können die Zerkleinerungseinrichtungen 38, 40 und/oder der Sammelbehälter 44 etwas seitlich über das Endlosgrundprofi 30 hinaus abstehen.

## Patentansprüche

1. Produktionsanlage zur Herstellung extrudierter Platten (36), insbesondere für Paneele zur Abdeckung einer Oberfläche eines Raums, mit

   einer Fördereinrichtung (22) zur Förderung eines als plattenförmiges Endlosprofil erzeugten Halbzeugs (20) entlang einer Förderrichtung mit einer definierten Fördergeschwindigkeit, einer Kantenschneideinrichtung (24) zum Abtrennen eines zur Förderrichtung seitlichen Randbereichs (28) des Halbzeugs (20), so dass in Förderrichtung nach der Kantenschneideinrichtung (24) das Halbzeug (20) als plattenförmiges Endlosgrundprofil (30) mit einer quer zur Förderrichtung verlaufenden vordefinierten Grundplattenbreite vorliegt, und einer Vereinzelungseinrichtung (32) zum Abtrennen von vereinzelten Platten (36) von dem Endlosgrundprofil (30), insbesondere entlang einer quer zur Förderrichtung verlaufenden Trennlinie,
   **dadurch gekennzeichnet, dass**
   ein Abstand (D) der Vereinzelungseinrichtung (32) zu der Kantenschneideinrichtung (24) in Fördereinrichtung derart bemessen ist, dass zwischen einer Durchschnittstemperatur $T_1$ des Halbzeugs (20) beim Abtrennen des Randbereichs (28) in der Kantenschneideinrichtung (24) und einer Durchschnittstemperatur $T_2$ des Endlosgrundprofil (30) beim Vereinzeln eine Temperaturdifferenz $T_1$-$T_2$ von 2 K $\leq T_1$-$T_2 \leq$ 15 K, insbesondere 4 K $\leq T_1$-$T_2 \leq$ 10 K und vorzugsweise 5 K $\leq T_1$-$T_2 \leq$ 8 K vorliegt.

2. Produktionsanlage nach Anspruch 1 **dadurch gekennzeichnet, dass** für die Durchschnittstemperatur $T_1$ des Halbzeugs (20) beim Abtrennen des Randbereichs (28) in der Kantenschneideinrichtung 40°C $\leq T_1 \leq$ 60°C, insbesondere 45°C $\leq T_1 \leq$ 50°C und vorzugsweise $T_1$ = 47°C $\pm$ 2 K vorgesehen ist.

3. Produktionsanlage nach Anspruch 1 oder 2 **dadurch gekennzeichnet, dass** für eine Abkühlung des Endlosgrundprofil (30) zwischen der Kantenschneideinrichtung (32) und der Vereinzelungseinrichtung (24) ausschließlich eine Abkühlung durch Konvektion, insbesondere ausschließlich natürliche Konvektion, vorgesehen ist.

4. Produktionsanlage nach einem der Ansprüche 1 bis 3 **dadurch gekennzeichnet, dass** die Kantenschneideinrichtung (24) ein spanloses Trennen des Radbereichs (28) von dem Halbzeug (20), insbesondere mit Hilfe eines als Schneidrolle (26) ausgestalteten Trennwerkzeugs, bereitstellt.

5. Produktionsanlage nach einem der Ansprüche 1 bis 4 **dadurch gekennzeichnet, dass** die Vereinzelungseinrichtung (32) ein spanloses Trennen der Platte (36) von dem Endlosgrundprofil (30) mit Hilfe eines, insbesondere als Guillotine-Messer (34) ausgestalteten, Trennwerkzeugs, bereitstellt, wobei insbesondere das Trennwerkzeug der Vereinzelungseinrichtung (32) mit der Fördergeschwindigkeit des Endlosgrundprofis (30) in Förderrichtung mitbewegbar ausgestaltet ist.

6. Produktionsanlage nach einem der Ansprüche 1 bis 5 **dadurch gekennzeichnet, dass** in Förderrichtung zwischen der Kantenschneideinrichtung (24) und der Vereinzelungseinrichtung (32) ein Sammelbehälter (44) zum Sammeln der in der Kantenschneideinrichtung (24) abgetrennten Randbereiche (28) angeordnet ist.

7. Produktionsanlage nach Anspruch 6 **dadurch gekennzeichnet, dass** der Sammelbehälter (44) in Schwerkraftrichtung unterhalb des Endlosgrundprofil (30) angeordnet ist, wobei insbesondere das Endlosgrundprofil (30) den Sammelbehälter (44) in Schwerkraftrichtung betrachtet zumindest zu einem Großteil überdeckt.

8. Produktionsanlage nach Anspruch 6 oder 7 **dadurch gekennzeichnet, dass** der Sammelbehälter (44) mit einer Rückfördereinrichtung zur Förderung des Inhalts des Sammelbehälters (44) in einen Recyclingbehälter (14) verbunden ist, wobei insbesondere der Recyclingbehälter (14) zur zumindest teilweisen und/oder zeitweiligen Beaufschlagung eines Extruders (16) zur Erzeugung des Halbzeugs (20) mit einem aus dem Recyclingbehälter (14) stammenden Edukt mit dem Extruder (16) verbindbar ist.

9. Produktionsanlage nach einem der Ansprüche 1 bis 8 **dadurch gekennzeichnet, dass** in Fördereinrichtung zwischen der Kantenschneideinrichtung (24) und der Vereinzelungseinrichtung (32) mindestens eine Zerkleinerungseinrichtung (38, 40) zur Zerkleinerung des als streifenförmigen Endlosprofil abgetrennten Randbereichs (28) vorgesehen ist, wobei die Zerkleinerungseinrichtung (38, 40) ausgestaltet ist in der Zerkleinerungseinrichtung (38, 40) aus dem abgetrennten Randbereich (28) erzeugte zerkleinerte Randstücke (42) einem Sammelbehälter (44) zuzuführen, wobei insbesondere die Zerkleinerungseinrichtung (38, 40) in Förderrichtung zwischen der Kantenschneideinrichtung (24) und dem Sammelbehälter (44) vorgesehen ist.

10. Produktionsanlage nach Anspruch 9 **dadurch gekennzeichnet, dass** eine erste Zerkleinerungseinrichtung (38) zur Zerkleinerung eines an einem ersten Rand des Halbzeugs (20) abgetrennten ersten Randbereichs (28) und eine zweite Zerkleinerungseinrichtung (40) zur Zerkleinerung eines an einem vom dem ersten Rand wegweisenden zweiten Rand des Halbzeugs (20) abgetrennten zweiten Randbereichs (28) vorgesehen sind, wobei sowohl die erste Zerkleinerungseinrichtung (38) als auch die zweite Zerkleinerungseinrichtung (40) in Fördereinrichtung zwischen der Kantenschneideinrichtung (24) und dem Sammelbehälter (44) vorgesehen sind, wobei sowohl die erste Zerkleinerungseinrichtung (38) als auch die zweite Zerkleinerungseinrichtung (40) die in der jeweiligen Zerkleinerungseinrichtung (38, 40) erzeugten Randstücke (42) dem selben Sammelbehälter (44) zuführen.

11. Produktionsanlage nach Anspruch 9 oder 10 **dadurch gekennzeichnet, dass** die mindestens eine Zerkleinerungseinrichtung (38, 40) in Schwerkraftrichtung unterhalb des Endlosgrundprofil (30) angeordnet ist, wobei insbesondere das Endlosgrundprofil (30) die mindestens eine Zerkleinerungseinrichtung (38, 40) in Schwerkraftrichtung betrachtet zumindest zu einem Großteil überdeckt.

12. Produktionsanlage nach einem der Ansprüche 1 bis 11 **dadurch gekennzeichnet, dass** in Förderrichtung hinter der Vereinzelungseinrichtung (34) eine Trenneinrichtung zum, insbesondere spanlosen, Zerteilen der Platte (36) in einzelne Paneele, insbesondere entlang mindestens einer in Förderrichtung verlaufenden Trennlinie, vorgesehen ist, wobei ein Abstand der Trenneinrichtung zu der Vereinzelungseinrichtung (34) in Fördereinrichtung derart bemessen ist, dass zwischen einer Durchschnittstemperatur $T_2$ des Endlosgrundprofils (30) beim Vereinzeln in der Vereinzelungseinrichtung (34) und einer Durchschnittstemperatur $T_3$ der Platte (36) beim Zerteilen in der Trenneinrichtung eine Temperaturdifferenz $T_2$-$T_3$ von 0 K $\leq$ $T_2$-$T_3$ $\leq$ 20 K, insbesondere 3 K $\leq$ $T_2$-$T_3$ $\leq$ 15 K und vorzugsweise $T_2$-$T_3$ = 5 K $\pm$ 2 K vorliegt.

13. Produktionsanlage nach einem der Ansprüche 1 bis 12 **dadurch gekennzeichnet, dass** die Förderein-richtung (22) eine Fördergeschwindigkeit $v_1$ von 4,5 m/min $\leq v_1 \leq$ 21,0 m/min, insbesondere 5,0 m/min $\leq v_1 \leq$ 8,0 m/min und vorzugsweise $v_1$ = 5,5 m/min $\pm$ 0,5 m/min oder $v_1$ = 7,5 m/min $\pm$ 0,5 m/min bereitstellt.

14. Produktionsanlage nach Anspruch 13 **dadurch gekennzeichnet, dass** die Fördereinrichtung (22) an einem zu einem Extruder (16) weisenden, insbesondere in einem im Wesentlichen pastösen Zustand vorliegenden, Anfangsbereich des Halbzeugs (20) eine in Förderrichtung weisende Druckkraft und an einem zu der Vereinzelungseinrichtung (32) weisenden, insbesondere in einem im Wesentlichen festen Zustand vorliegenden, Endbereich des Endlosgrundprofil (30) eine in Förderrichtung weisende Zugkraft aufprägt, wobei die angreifenden Druckkräfte und Zugkräfte derart bemessen sind, dass durch Wärmedehnungseffekte während einer Abkühlung des Halbzeugs (20) entstehende Stauchungen und Streckungen zumindest zu einem Großteil kompensiert sind.

**Claims**

1. Production line for manufacturing extruded plates (36), in particular for panels for covering a surface of a room, comprising

   a conveyor (22) for conveying a semifinished product (20) produced as a plate-shaped endless profile along a conveying direction at a defined conveying speed;
   an edge cutting device (24) for cutting off an edge area (28) of the semifinished product (20) which is lateral with respect to the conveying direction, so that in the conveying direction downstream of the edge cutting device (24), the semifinished product (20) is formed as a plate-shaped endless base profile (30) with a predefined base plate width extending transversely to the conveying direction; and
   a separation device (32) for cutting off separated plates (36) from the endless base profile (36), in particular along a cutting line extending transversely to the conveying direction, **characterized in that**
   a distance (D) between the separating device (32) and the edge cutting device (24) in the conveying direction is dimensioned in such a way that between an average temperature $T_1$ of the semifinished product (20) when the edge area (28) is cut off in the edge cutting device (24) and an average temperature $T_2$ of the endless base profile (30) during the separation process, there is a temperature difference $T_1$-$T_2$ of $2\,K \leq T_1$-$T_2$

$\leq$ 15 K, in particular 4 K $\leq T_1$-$T_2 \leq$ 10 K and preferably 5 K $\leq T_1$-$T_2 \leq$ 8 K.

2. Production line according to claim 1, **characterized in that**, for the average temperature $T_1$ of the sem-ifinished product (20) when cutting off the edge area (28) in the edge cutting device 40°C $\leq T_1 \leq$ 60°C, in particular 45°C $\leq T_1 \leq$ 50°C and preferably $T_1$ = 47°C $\pm$ 2 K is provided.

3. Production line according to claim 1 or 2, **characterized in that** cooling of the endless base profile (30) between the edge cutting device (32) and the separating device (24) is provided exclusively by convection, in particular exclusively by natural convection.

4. Production line according to any one of claims 1 to 3, **characterized in that** the edge cutting device (24) provides a chipless cutting of the edge area (28) from the semifinished product (20), in particular by means of a cutting tool configured as a cutting roller (26).

5. Production line according to any one of claims 1 to 4, **characterized in that** the separating device (32) provides a chipless cutting of the plate (36) from the endless base profile (30) with the aid of a cutting tool, in particular designed as a guillotine blade (34), wherein, in particular, the cutting tool of the separating device (32) is configured to be co-movable at the conveying speed of the endless base profile (30) in the conveying direction.

6. Production line according to any one of claims 1 to 5, **characterized in that** a collecting container (44) for collecting the edge areas (28) cut off in the edge cutting device (24) is arranged in the conveying direction between the edge cutting device (24) and the separating device (32).

7. Production line according to claim 6, **characterized in that** the collecting container (44) is arranged below the endless base profile (30) in the direction of gravity, wherein in particular the endless base profile (30) covers the collecting container (44) at least to a large extent as viewed in the direction of gravity.

8. Production line according to claim 6 or 7, **characterized in that** the collecting container (44) is connected to a return conveyor for conveying the contents of the collecting container (44) into a recycling container (14), wherein in particular the recycling container (14) can be connected to the extruder (16) for the at least partial and/or temporary loading of an extruder (16) for producing the semifinished product (20) with an educt originating from the recycling container (14).

9. Production line according to any one of claims 1 to 8, **characterized in that** at least one crushing device (38, 40) for crushing the edge area (28) cut off as a strip-shaped endless profile is provided in the conveying direction between the edge cutting device (24) and the separating device (32), wherein the crushing device (38, 40) is configured to feed crushed edge pieces (42) produced in the crushing device (38, 40) from the cut-off edge area (28) to a collecting container (44), wherein in particular the crushing device (38, 40) is provided in the conveying direction between the edge cutting device (24) and the collecting container (44).

10. Production line according to claim 9, **characterized in that** a first crushing device (38) for crushing a first edge area (28) cut off at a first edge of the semifinished product (20) and a second crushing device (40) for crushing a second edge area (28) cut off from a second edge of the semifinished product (20) facing away from the first edge are provided, wherein both the first crushing device (38) and the second crushing device (40) are provided in the conveying direction between the edge cutting device (24) and the collecting container (44), wherein both the first crushing device (38) and the second crushing device (40) feed the edge pieces (42) produced in the respective crushing device (38, 40) to the same collecting container (44).

11. Production line according to claim 9 or 10, **characterized in that** the at least one crushing device (38, 40) is arranged below the endless base profile (30) in the direction of gravity, wherein, in particular, the endless base profile (30) covers the at least one crushing device (38, 40) at least to a large extent, as viewed in the direction of gravity.

12. Production line according to any one of claims 1 to 11, **characterized in that**, downstream of the separating device (34) in the conveying direction a cutting device for cutting the plate (36), in particular chipless, into individual panels, is provided in particular along at least one cutting line extending in the conveying direction, wherein a distance between the cutting device and the separating device (34) in the conveying direction is dimensioned in such a way that between an average temperature $T_2$ of the endless base profile (30) during the separation in the separating device (34) and an average temperature $T_3$ of the plate (36) during cutting in the cutting device there is a temperature difference $T_2$-$T_3$ of $0\,K \leq T_2$-$T_3 \leq 20\,K$, in particular $3\,K \leq T_2$-$T_3 \leq 15\,K$ and preferably $T_2$-$T_3 = 5\,K \pm 2\,K$.

13. Production line according to any one of claims 1 to 12, **characterized in that** the conveyor (22) provides a conveying speed $v_1$ of $4.5\,m/min \leq v_1 \leq 21.0\,m/min$, in particular $5.0\,m/min \leq v_1 \leq 8.0\,m/min$ and preferably $v_1 = 5.5\,m/min \pm 0.5\,m/min$ or $v_1 = 7.5\,m/min \pm 0.5\,m/min$.

14. Production line according to claim 13, **characterized in that** the conveyor (22) exerts a compressive force pointing in the conveying direction at an initial region of the semifinished product (20) which faces towards an extruder (16) and is present in particular in a substantially pasty state, and a pulling force pointing in the conveying direction at an initial region of the semifinished product (20) which faces towards the separating device (32) and is present in particular in a substantially solid state, wherein the compressive forces and tensile forces acting are dimensioned in such a way that compression and stretching caused by thermal expansion effects during cooling of the semifinished product (20) are compensated at least to a large extent.

## Revendications

1. Installation de production destinée à la fabrication de plaques (36) extrudées, en particulier destinées à des panneaux pour le recouvrement d'une surface d'une pièce, avec

   un dispositif de transport (22) permettant le transport d'un produit semi-fini (20) créé sous forme d'un profilé sans fin en forme de plaque le long d'une direction de transport avec une vitesse de transport définie,
   un dispositif de coupe des bords (24) permettant de séparer une zone de bord (28) latérale du produit semi-fini (20) par rapport à la direction de transport, de sorte que, dans la direction de transport, après le dispositif de coupe des bords (24), le produit semi-fini (20) se présente sous forme d'un profilé de base sans fin (30) en forme de plaque avec une largeur de plaque de base prédéfinie s'étendant perpendiculairement par rapport à la direction de transport, et
   un dispositif de portionnement (32) permettant de séparer des plaques (36) individuelles du profilé de base sans fin (30), en particulier le long d'une ligne de séparation s'étendant perpendiculairement par rapport à la direction de transport,
   **caractérisée en ce**
   **qu'**une distance (D) du dispositif de portionnement (32) jusqu'au dispositif de coupe des bords (24) est mesurée dans le dispositif de transport est dimensionnée de telle manière qu'entre une température moyenne $T_1$ du produit semi-fini (20) lors de la séparation de la zone de bord (28) dans le dispositif de coupe de bords (24) et une température moyenne $T_2$ du profilé de base sans fin (30) lors du portionnement, il y a une

différence de température $T_1 - T_2$ de $2K \leq T_1 - T_2 \leq 15K$, en particulier, $4K \leq T_1 - T_2 \leq 10K$ et de préférence $5K \leq T_1 - T_2 \leq 8K$.

2. Installation de production selon la revendication 1, **caractérisée en ce que** pour la température moyenne $T_1$ du produit semi-fini (20) lors de la séparation de la zone de bord (28) dans le dispositif de coupe des bords, il est prévu $40\ °C \leq T_1 \leq 60\ °C$, en particulier $45\ °C \leq T_1 \leq 50\ °C$ et de préférence $T_1 = 47\ °C \pm 2K$.

3. Installation de production selon la revendication 1 ou la revendication 2, **caractérisée en ce que**, pour un refroidissement du profilé de base sans fin (30) entre le dispositif de coupe des bords (32) et le dispositif de portionnement (24), un refroidissement par convexion est exclusivement prévu, en particulier exclusivement une convexion naturelle.

4. Installation de production selon l'une des revendications 1 à 3, **caractérisée en ce que** le dispositif de coupe des bords (24) procure une séparation sans copeaux de la zone de bord (28) du produit semi-fini (20), en particulier à l'aide d'un outil de séparation conçu sous forme d'un rouleau de coupe (26).

5. Installation de production selon l'une des revendications 1 à 4, **caractérisée en ce que** le dispositif de portionnement (32) procure une séparation sans copeaux de la plaque (36) du profilé de base sans fin (30) à l'aide d'un outil de séparation conçu notamment sous forme d'une lame de guillotine (34), où, en particulier, l'outil de séparation du dispositif de portionnement (32) est conçu mobile dans la direction de transport avec la vitesse de transport du profilé de base sans fin (30).

6. Installation de production selon l'une des revendications 1 à 5, **caractérisée en ce qu'**un récipient de collecte (44) permettant de collecter les zones de bord (28) séparées dans le dispositif de coupe des bords (24) est disposé dans la direction de transport entre le dispositif de coupe des bords (24) et le dispositif de portionnement (32).

7. Installation de production selon la revendication 6, **caractérisée en ce que** le récipient de collecte (44) est disposé dans la direction de la gravité en-dessous du profilé de base sans fin (30), où, en particulier, le profilé de base sans fin (30) recouvre le récipient de collecte (44) au moins en grande partie, vu dans la direction de la gravité.

8. Installation de production selon la revendication 6 ou la revendication 7, **caractérisée en ce que** le récipient de collecte (44) est relié avec un dispositif de renvoi permettant le transport du contenu du récipient de collecte (44) dans un récipient de recyclage (14), où, en particulier, le récipient de recyclage (14) peut être relié avec une extrudeuse (16) pour une sollicitation au moins partielle et/ou momentanée de l'extrudeuse (16) pour la création du produit semi-fini (20) avec un produit provenant du récipient de recyclage (14).

9. Installation de production selon l'une des revendications 1 à 8, **caractérisée en ce qu'**au moins un dispositif de déchiquetage (38, 40) pour le déchiquetage de la zone de bord (28) séparée sous forme de profilé sans fin en forme de bande est prévu dans la direction de transport entre le dispositif de coupe des bords (24) et le dispositif de portionnement (32), où le dispositif de déchiquetage (38, 40) est conçu pour amener des morceaux de bord (42) déchiquetés générés à partir de la zone de bord (28) séparée dans le disposition de déchiquetage (38, 40) dans un récipient de collecte (44), où, en particulier, le dispositif de déchiquetage (38, 40) est prévu dans la direction de transport entre le dispositif de coupe des bords (24) et le récipient de collecte (44).

10. Installation de production selon la revendication 9, **caractérisée en ce qu'**un premier dispositif de déchiquetage (38) permettant le déchiquetage d'une première zone de bord (28) séparée d'un premier bord du produit semi-fini (20) et un deuxième dispositif de déchiquetage (40) permettant le déchiquetage d'une deuxième zone de bord (28) séparée d'un deuxième bord du produit semi-fini (20) opposé au premier bord, sont prévus, où, à la fois, le premier dispositif de déchiquetage (38) et le deuxième dispositif de déchiquetage (40) sont prévus dans la direction de transport entre le dispositif de coupe des bords (24) et le récipient de collecte (44), où à la fois le premier dispositif de déchiquetage (38) et le deuxième dispositif de déchiquetage (40) amènent les pièces de bords (42) générées dans le dispositif de déchiquetage (38, 40) respectif dans le même récipient de collecte (44).

11. Installation de production selon la revendication 9 ou la revendication 10, **caractérisée en ce qu'**au moins un dispositif de déchiquetage (38, 40) est disposé dans la direction de la gravité en-dessous du profilé de base sans fin (30), où, en particulier, le profilé de base sans fin (30) recouvre au moins en grande partie l'au moins un dispositif de déchiquetage (38, 40), vu dans la direction de la gravité.

12. Installation de production selon l'une des revendications 1 à 11, **caractérisée en ce qu'**un dispositif de séparation est prévu dans la direction de transport derrière le dispositif de portionnement (34), en particulier, pour la division sans copeaux de la plaque (36) en panneaux individuels, notamment le long d'au moins une ligne de séparation s'étendant dans la direction de transport, où une distance du dispositif de séparation jusqu'au dispositif de portionnement (34) dans la direction de transport est dimensionnée de telle manière qu'entre une température moyenne $T_2$ du profilé de base sans fin (30) lors de la division dans le dispositif de portionnement (34) et une température moyenne $T_3$ de la plaque (36) lors de la division dans le dispositif de séparation il y a une différence de température $T_2 - T_3$ de $0\,K \leq T_2 - T_3 \leq 20\,K$, notamment $3\,K \leq T_2 - T_3 \leq 15\,K$, et de préférence $T_2 - T_3 = 5\,K \pm 2\,K$.

13. Installation de production selon l'une des revendications 1 à 12, **caractérisée en ce que** le dispositif de transport (22) fournit une vitesse de transport $v_1$ de $4,5\ m/min \leq v_1 \leq 21,0\ m/min$, notamment $5,0\ m/min \leq v_1 \leq 8,0\ m/min$, et de préférence $v_1 = 5,5\ m/min \pm 0,5\ m/min$ ou $v_1 = 7,5\ m/min \pm 0,5\ m/min$.

14. Installation de production selon la revendication 13, **caractérisée en ce que** le dispositif de transport (22) développe vis à vis d'une extrudeuse (16) une force de pression orientée dans la direction de transport sur une zone de démarrage du produit semi-fini (20) se trouvant notamment essentiellement dans un état pâteux, et une force de traction orientée dans la direction de transport dans une zone de fin du profilé de base sans fin (30), orientée vers le dispositif de portionnement(32), se trouvant notamment présent dans un état essentiellement solide, où les forces de pression et les forces de traction développées sont dimensionnées de telle manière que les compressions et les tractions créées par des effets de dilatation thermique sont au moins en grande partie compensées pendant un refroidissement du produit semi-fini (20).

Fig. 1

Fig. 2

**IN DER BESCHREIBUNG AUFGEFÜHRTE DOKUMENTE**

**In der Beschreibung aufgeführte Patentdokumente**

- WO 2007079845 A1
- EP 3578384 A1
- WO 2010024292 A1
- DE 102007004247 A1
- US 2007023953 A1
- US 5190711 A